(19) **Europäisches Patentamt / European Patent Office / Office européen des brevets**

(11) **EP 2 092 168 B1**

(12) **FASCICULE DE BREVET EUROPEEN**

(45) Date de publication et mention de la délivrance du brevet:
**15.12.2010 Bulletin 2010/50**

(21) Numéro de dépôt: **07858634.4**

(22) Date de dépôt: **19.10.2007**

(51) Int Cl.:
*F01N 3/023* (2006.01)   *F01N 3/025* (2006.01)

(86) Numéro de dépôt international:
**PCT/FR2007/052212**

(87) Numéro de publication internationale:
**WO 2008/062119 (29.05.2008 Gazette 2008/22)**

(54) **PROCEDE DE DETERMINATION DE LA QUANTITE DE CARBURANT A INJECTER DANS UNE LIGNE D'ECHAPPEMENT EN VUE DE REGENERER UN FILTRE A PARTICULES**

VERFAHREN ZUR BESTIMMUNG DER IN EINE AUSLASSLEITUNG EINZUSPRITZENDEN KRAFTSTOFFMENGE ZUR REGENERATION EINES TEILCHENFILTERS

METHOD FOR DETERMINING THE AMOUNT OF FUEL TO BE INJECTED IN AN EXHAUST LINE FOR REGENERATING A PARTICLE FILTER

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **23.11.2006 FR 0610260**

(43) Date de publication de la demande:
**26.08.2009 Bulletin 2009/35**

(73) Titulaire: **Renault S.A.S.**
**92100 Boulogne-Billancourt (FR)**

(72) Inventeurs:
- **SADAI, Stéphane**
  **75013 Paris (FR)**
- **DESCAMPS, Xavier**
  **91700 St Genevieve Des Bois (FR)**
- **GOUBAULT, Catherine**
  **91470 Forges Les Bains (FR)**
- **GODON, Fabien**
  **94400 Vitry Sur Seine (FR)**
- **DUPONT, Jérôme**
  **91600 Savigny Sur Orge (FR)**

(74) Mandataire: **Religieux, Vincent et al**
**Renault Technocentre**
**Sce 00267 - TCR GRA 2 36**
**1, avenue du Golf**
**78288 Guyancourt Cedex (FR)**

(56) Documents cités:
**EP-A- 1 517 011    EP-A- 1 582 709**
**FR-A1- 2 880 065**

**Description**

L'invention concerne le traitement des gaz d'échappement et plus particulièrement les méthodes et les systèmes de détermination de la quantité de carburant à injecter dans une ligne d'échappement équipée d'un filtre à particules en vue de la régénération de ce dernier.

De manière connue, les véhicules émettant des particules, tels que les véhicules diesel, comportent en sortie de moteur une ligne d'échappement équipée d'un filtre à particules (FAP).

Un FAP fonctionne habituellement en alternance selon deux phases.

Dans une première phase dite de piégeage, il retient les substances polluantes émises par le moteur avant leur rejet dans l'atmosphère. Ces substances polluantes comprennent des particules également appelées suies qui s'accumulent continuellement sur le FAP. Cette accumulation de particules accroît la perte de charge dans la ligne d'échappement ce qui crée une forte contre pression à l'échappement du moteur et diminue les performances du moteur.

Dans une seconde phase dite de régénération ou de traitement, les particules retenues par le FAP sont brûlées. L'initiation et le maintien de la combustion des particules dans le filtre s'obtiennent par élévation de la température interne du FAP.

A cet effet, on introduit dans la ligne d'échappement des réducteurs, tels que des hydrocarbures (HC) et du monoxyde de carbone (CO), destinés à produire de la chaleur lors de leur oxydation avec l'oxygène présent dans les gaz d'échappement. Cette oxydation a lieu sur le FAP lui-même et également, pour les lignes d'échappement qui en sont équipés, sur un catalyseur d'oxydation (DOC) disposé en amont du FAP.

L'introduction de réducteurs dans la ligne d'échappement est assurée par des injections de carburant spécialement dédiées à cet effet. Ce carburant destiné à participer à la régénération du FAP est désigné par la suite carburant de régénération afin d'être distingué du carburant injecté dans les cylindres du moteur pour générer les différents cycles moteur. Les injections de carburant de régénération sont assurées :

- par une injection tardive. Cette injection est effectuée par les injecteurs associés aux cylindres du moteur. Ces injecteurs, désignés par la suite injecteurs cylindre injectent du carburant dans les chambres de combustion du moteur après le point mort haut (PMH) lors de la phase de détente. Ce carburant de régénération ne brûle pas dans la chambre de combustion, mais dans la partie catalytique de la ligne d'échappement, et/ou
- par une injection de carburant directement dans la ligne d'échappement. Cette injection, désignée injection d'échappement, est assurée par un injecteur d'échappement disposé dans la ligne d'échappement.

La régénération est pilotée par le calculateur de contrôle moteur qui détermine, en fonction de plusieurs paramètres dont le chargement en suies du filtre à particules, l'instant de la régénération ainsi que sa durée et les paramètres d'injection pendant cette phase.

Pour améliorer l'efficacité de la régénération, il est nécessaire de produire une température interne au filtre qui soit favorable à l'oxydation des suies et ce, quel que soit le point de fonctionnement du moteur. Cette température est typiquement de l'ordre de 570 à 650°C ce qui est supérieur à la température normale de l'échappement.

Il convient donc d'assurer un contrôle précis de la thermique à l'intérieur du FAP afin d'atteindre une régénération optimale de ce dernier.

Actuellement, ce contrôle de la thermique du FAP est effectué par un réglage consistant à répartir la quantité de carburant de régénération injecté entre les injections tardives et l'injection d'échappement afin d'atteindre une température de consigne en sortie du DOC.

La quantité de carburant de régénération à injecter est par exemple déterminée dans le document EP1582709 par:

- un réglage statique, c'est-à-dire en boucle ouverte. On détermine un débit de consigne de carburant de régénération à injecter en fonction d'une cartographie par point de fonctionnement régime/couple moteur,
- un contrôle par retour d'état, c'est-à-dire en boucle fermée. Un correcteur PID (Proportionnel Intégrateur Dérivateur) effectue une correction dépendant de l'écart entre la thermique en entrée du FAP et d'une consigne de température du FAP.

Ainsi, de manière connue, il est prévu d'essayer de prendre en compte les dérives et dispersions de la quantité de carburant de régénération injecté. Ces dérives et dispersions, qui peuvent être significatives, sont essentiellement dues à la diminution de la précision qui accompagne le vieillissement des injecteurs.

La quantité de carburant de régénération déterminée par les systèmes connus est bien souvent peu adaptée à la thermique du FAP. Il en résulte:

- soit une diminution de l'efficacité de la régénération et des performances du moteur si la température effective du FAP est plus basse que la température idéale,

- soit un risque de destruction du FAP si sa température est à l'inverse trop importante.

A cet effet, il est prévu dans le cadre de la présente invention un procédé de détermination de la quantité de carburant de régénération à injecter dans une ligne d'échappement d'un véhicule équipé d'un filtre à particules (FAP), d'un catalyseur d'oxydation (DOC) et d'au moins un injecteur d'échappement, en vue de régénérer le FAP, caractérisé en ce que:

- on détermine une consigne de quantité de carburant de régénération à injecter dans la ligne d'échappement par l'injecteur d'échappement,
- on détermine à partir de mesures un exotherme mesuré du DOC,
- on détermine à partir d'une modélisation un exotherme modélisé du DOC,
- on effectue une comparaison de données déduites de l'exotherme mesuré à des données déduites de l'exotherme modélisé,
- on corrige la consigne en fonction de la comparaison.

Il est ici rappelé que l'exotherme du DOC correspond à la quantité de chaleur qu'il dégage par réaction d'oxydation. Un exotherme correspond donc à une énergie et est fonction notamment de la température en entrée et en sortie du DOC.

Le procédé selon l'invention n'est pas fonction d'un écart entre la thermique en entrée du FAP et une consigne de température comme dans les procédés connus.

Dans la présente invention, à partir de l'écart sur les exothermes mesuré et modélisé du DOC on peut corriger la consigne de débit de l'injecteur d'échappement. Cette stratégie de recalage de la quantité de réducteurs permet de s'affranchir des dérives et dispersions des injecteurs ou des capteurs tout en améliorant les performances dynamiques du système par rapport aux systèmes existants.

Le procédé selon l'invention pourra en outre présenter facultativement au moins l'une des caractéristiques suivantes :

- on détermine l'exotherme mesuré en appliquant la formule suivante :

$$Qexo(t)_{mesuré} = T_{gaz\ sortie}\ (t) * Q_{gaz}\ (t) * Cp_{gaz\ sortie} + m_{DOC}Cp_{DOC} * [\ T_{DOC}\ (t) - T_{DOC}\ (t-1)\ ] + Wpertes - T_{gaz\ entrée}\ (t) * Q_{gaz}\ (t) * Cp_{gaz\ entrée}$$

dans laquelle les différents termes correspondent aux grandeurs suivantes :

$Qexo(t)_{mesuré}$ : exotherme mesuré du DOC,
$T_{gaz\ sortie}$ (t) : température des gaz d'échappement en sortie du DOC à l'instant t,
$Q_{gaz}$ (t) : débit de gaz d'échappement à l'instant t,
$Cp_{gaz\ sortie}$ : capacité calorifique des gaz d'échappement en sortie du DOC,
$M_{DOC}$ : masse du DOC,
$Cp_{DOC}$ : capacité calorifique du DOC,
$T_{DOC}$ (t) : température du DOC à l'instant t,
$T_{DOC}$ (t-1) : température du DOC à l'instant t-1,
$T_{gaz\ entrée}$ (t) : température des gaz d'échappement en entrée du DOC à l'instant t,
$Q_{gaz}$ (t) : débit de gaz d'échappement en entrée du DOC à l'instant t,
$CP_{gaz\ entrée}$ : capacité calorifique des gaz d'échappement en entrée du DOC.

- on détermine l'exotherme modélisé en appliquant la formule suivante :

$$Qexo(t)_{modélisé} = Q_{inj\ d'échappement}\ (t) * pci\_Red$$

dans laquelle les différents termes correspondent aux grandeurs suivantes :

$QeXO(t)_{modélisé}$: modélisation de *l'exotherme du DOC généré par l'injection d'échappement*,
$Q\_inj\ d'échappement\ (t)$: débit de carburant de régénération injecté par l'injecteur d'échappement,
pci_Red : pouvoir calorifique inférieur moyen des réducteurs présents dans le carburant de régénération.

- on effectue la comparaison en appliquant la formule suivante :

$$\alpha = \frac{\int Qexo\_mesuré(t) \cdot dt}{\int Qexo\_modélisé(t) \cdot dt}$$

- on corrige la consigne par un gain Coeff multiplicatif, ce gain Coeff étant déterminé en appliquant la formule suivante :

$$Coeff(n) = (1 - pond) * Coeff(n-1) + pond * \alpha(n)$$

dans laquelle les différents termes correspondent aux grandeurs suivantes :

pond : coefficient de pondération dépendant du poids de la comparaison effectuée à l'étape précédente,
*Coeff(n)* : coefficient d'erreur calculé à l'étape n,
*Coeff(n-1)* : coefficient d'erreur calculé à l'étape n-1.

- on détermine la consigne en fonction d'une cartographie par point de fonctionnement régime/couple du moteur,
- on dispose un capteur amont de température en amont de l'entrée du DOC et on recompose le signal de température des gaz d'échappement en entrée du DOC en fonction d'une modélisation et des données issues du capteur amont.
- on détermine une consigne d'injection tardive définissant la quantité de carburant de régénération à injecter dans la ligne d'échappement par un ou plusieurs injecteurs cylindre disposés dans les cylindres du moteur, on détermine à partir de mesures un exotherme mesuré du DOC, on détermine à partir d'une modélisation un exotherme d'injection tardive modélisé du DOC représentant l'exotherme généré par le carburant de régénération injecté par les injecteurs disposés dans les cylindres du moteur, on effectue une comparaison de données déduites de l'exotherme mesuré à des données déduites de l'exotherme d'injection tardive modélisé, on corrige la consigne d'injection tardive en fonction de la comparaison.
- on détermine l'exotherme d'injection tardive modélisé en appliquant la formule suivante :

$$Qexo\_modélisé(t) = Q_{\_inj\ cylindre\ HC}(t)*pci\_HC + Q_{\_inj\ cylindre\ CO}(t)*pci\_CO$$

dans laquelle les différents termes correspondent aux grandeurs suivantes :

$Qexo(t)_{modélisé}$: modélisation de *l'exotherme du DOC généré par l'injection tardive,*
$Q_{\_inj\ cylindre\ HC}(t)$: débit de réducteur HC injecté lors de l'injection tardive par l'injecteur disposé dans le cylindre,
$Q_{\_inj\ cylindre\ CO}(t)$: débit de réducteur CO injecté lors de l'injection tardive par l'injecteur disposé dans le cylindre,
pci_HC: pouvoir calorifique inférieur moyen des réducteurs HC présents dans le carburant de régénération,
Pci CO : pouvoir calorifique inférieur moyen des réducteurs CO présents dans le carburant de régénération.

En outre, il est prévu selon l'invention un système de traitement des gaz d'échappement issus d'un moteur à combustion interne, comprenant une ligne d'échappement équipée d'un filtre à particules (FAP), d'un catalyseur d'oxydation (DOC), d'au moins un injecteur d'échappement, et d'une unité de contrôle, caractérisé en ce que le système est agencé de manière à mettre en oeuvre le procédé selon l'une quelconque des caractéristiques précédentes.
D'autres caractéristiques, buts et avantages de la présente invention apparaîtront à la lecture de la description détaillée qui va suivre, et en regard du dessin annexé donné à titre d'exemple non limitatif.

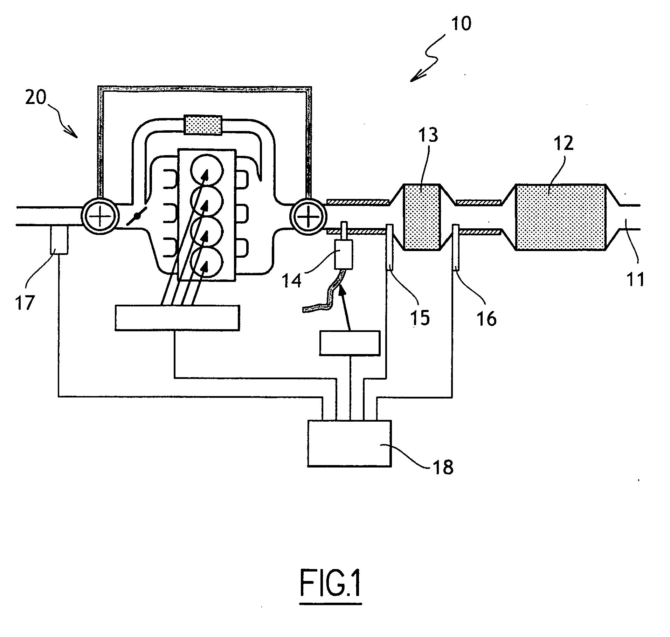

La figure 1, est un schéma d'ensemble présentant un moteur à combustion équipé d'un système de traitement des gaz d'échappement selon l'invention.
En référence à cette figure, on a illustré un moteur 20 à combustion interne dont l'échappement est associé à un système 10 de traitement des gaz d'échappement selon un exemple de réalisation de l'invention.

Le système 10 de traitement des gaz d'échappement comprend une ligne d'échappement 11 comportant un injecteur d'échappement 14, un catalyseur d'oxydation (DOC) 13 et un filtre à particules (FAP) 12 successivement disposés le long de la ligne d'échappement 11 depuis l'amont vers l'aval.

Les sens amont et aval sont définis par le sens de propagation des gaz d'échappement le long de la ligne d'échappement 11.

Dans la présente demande l'expression « gaz d'échappement » désigne l'ensemble des gaz circulant dans la ligne d'échappement 11. Ces gaz comprennent le mélange d'air et de carburant issu du moteur 20 ainsi que le carburant de régénération injecté par injection tardive et/ou par injection d'échappement.

Le FAP 12 est de type FAP à phase catalytique, c'est à dire qu'il contient des matériaux catalytiques destinés à favoriser l'oxydation des hydrocarbures (HC) et du monoxyde de carbone (CO).

De plus, le système 10 comprend des capteurs 15, 16 de température $Te_{DOC}$ et $Ts_{DOC}$ disposés respectivement en entrée et en sortie du DOC 13 et permettant de mesurer la température des gaz d'échappement respectivement en entrée et en sortie du DOC.

Le système 10 comprend également un débitmètre 17, disposé de préférence en amont du moteur 20. Ce débitmètre 17 permet de mesurer le débit d'air frais admis dans les cylindres du moteur 20.

Le système 10 comporte en outre une unité de contrôle (ECU) 18 dans laquelle est intégrée la stratégie de détermination de la quantité de carburant de régénération à injecter dans la ligne d'échappement 11.

On exposera dans un premier temps le principe général du procédé selon l'invention, puis on détaillera un mode de réalisation, enfin, on présentera des variantes à ce mode de réalisation.

Par la suite, et sauf précision contraire, on considère pour faciliter la compréhension de la présente invention que l'injection de carburant de régénération est uniquement assurée par l'injecteur d'échappement 14.

Dans le DOC 13, la réaction d'oxydation des réducteurs des gaz d'échappement (HC/CO) libère une énergie. Cette énergie créée un exotherme.

Cet exotherme est déterminé :

- d'une part par la mesure de l'état des gaz d'échappement à l'entrée et à la sortie du DOC 13. L'exotherme mesuré reflète les conditions d'entrées réelles du DOC 13. Cet exotherme mesuré est donc fonction de la quantité de carburant de régénération réellement injectée.
- d'autre part par une modélisation de la thermique du DOC 13.

L'exotherme modélisé reflète les conditions d'entrées nominales du DOC 13. Cet exotherme est donc fonction de la consigne d'injection de carburant de régénération.

Ainsi, on peut considérer que l'écart sur les exothermes mesuré et modélisé est dû à un écart sur les énergies entrantes ou énergies potentielles.

Par conséquent, en supposant que la modélisation du DOC 13 est idéale, on peut suivre les dérives et les dispersions de la quantité de carburant de régénération injectée en amont du DOC.

Comme indiqué précédemment, les systèmes actuels effectuent un réglage de la consigne d'injection de carburant de régénération au moyen d'un correcteur PID qui calcul un écart entre la thermique en entrée du FAP et une température de consigne.

Or, la demanderesse a identifié que l'inertie thermique du DOC est très élevée. Cela signifie que la température du DOC, et des gaz d'échappement au niveau du DOC n'augmentent qu'après un certain laps de temps faisant suite à l'injection de carburant de régénération. La température du FAP, situé en aval du DOC, est donc elle aussi influencée par l'inertie thermique du DOC.

Le temps de réponse des systèmes actuels est donc étroitement lié à l'inertie thermique du DOC.

Ainsi, la demanderesse s'est aperçue que les systèmes actuels ne sont susceptibles de compenser les dérives et dispersions des éléments influant sur la thermique en entrée du FAP, qu'uniquement en deuxième partie de régénération, c'est-à-dire lorsque le carburant de régénération est effectivement oxydé au niveau du DOC et que la température des gaz d'échappement a effectivement augmenté.

Les systèmes actuels ne permettent donc pas, par exemple, de prendre en compte un dépassement de consigne d'injection de carburant de régénération qui n'induit pas, au niveau du DOC une élévation de la température des gaz. Or, ce carburant de régénération est par la suite oxydé au niveau du FAP, ce qui induit une élévation non maîtrisée de la température du FAP.

Les systèmes actuels conduisent donc à des dépassements de consigne d'injection pouvant nuire, comme indiqué précédemment, aux performances ou à la durée de vie du moteur.

Dans la présente invention, la détermination de la consigne d'injection de carburant de régénération est basée sur une cartographie par point de fonctionnement régime/couple moteur et constitue donc un réglage en boucle ouverte. Cette boucle ouverte est associée à un contrôle adaptatif, également appelé système d'apprentissage, permettant de corriger la consigne. Ce contrôle adaptatif est basé sur une comparaison des exothermes mesuré et estimé du DOC 13.

Ainsi, la présente invention permet d'apprendre les effets des dérives des injecteurs durant la vie du véhicule et de venir en corriger les effets en temps réel, en modifiant la consigne. Cette stratégie de recalage permet de s'affranchir des dérives et dispersions tout en n'étant plus tributaire du temps de réponse du système.

La quantité de carburant de régénération injecté est donc mieux maîtrisée, et le FAP 12 est alors maintenu dans des conditions thermiques proches des conditions nominales. Par conséquent, les étapes de régénérations sont optimisées, et la durée de vie ainsi que les performances du moteur 20 sont améliorées.

Un mode de réalisation de la méthode selon l'invention va maintenant être détaillé.

Ce mode de réalisation comporte plusieurs étapes :

1) <u>Détermination de l'exotherme mesuré :</u>

L'exotherme mesuré est fonction de la quantité de carburant de régénération réellement injecté.

Cet exotherme mesuré est calculé à partir de la température des gaz d'échappement en amont et en aval du DOC 13, du débit des gaz d'échappement, des pertes thermiques et de la variation d'énergie interne du DOC 13. Cette dernière provient du modèle thermique que l'on cherche à recaler. Cette variation d'énergie n'est donc pas la variation réelle, mais elle va converger vers la bonne valeur au fur et à mesure que le modèle sera recalé.

Le calcul de l'exotherme mesuré repose sur le principe de conservation de la puissance dans le DOC 13 pendant un temps dt. Par volonté de simplification on considérera par la suite que dt = 1. Ainsi, l'exotherme mesuré s'obtient, à l'instant t en appliquant la formule suivante:

$$Qexo(t)_{mesuré} = T_{gaz\ sortie}\ (t)*\ Q_{gaz}\ (t)*Cp_{gaz\ sortie}\ +\ m_{DOC}Cp_{DOC}*[\ T_{DOC}\ (t)$$
$$-\ T_{DOC}\ (t\text{-}1)\ ]\ +\ Wpertes\ -\ T_{gaz\ entrée}\ (t)*\ Q_{gaz}\ (t)*Cp_{gaz\ entrée}$$

Cette formule laisse apparaître les termes suivants :

- Energie thermique en entrée du DOC:

$$T_{gaz\ entrée}\ (t)*\ Q_{gaz}\ (t)*Cp_{gaz\ entrée}\ +\ Qexo\ (t)$$

- Energie thermique en sortie du DOC:

$$T_{gaz\ sortie}\ (t)*\ Q_{gaz}\ (t)*Cp_{gaz\ sortie}$$

- Variation d'énergie dans le DOC :

$$m_{DOC}Cp_{DOC}*[T_{DOC}\ (t)\ -\ T_{DOC}\ (t\text{-}1)]$$

- Pertes thermiques aux parois du DOC :

$$Wpertes$$

Les différents termes de cette formule correspondent aux grandeurs suivantes :

$Qexo(t)_{mesuré}$ : *exotherme mesuré du DOC,*
$T_{gaz\ sortie}$ (t) : *température des gaz d'échappement en sortie du DOC à l'instant t,*
$Q_{gaz}$ (t) : *débit de gaz d'échappement à l'instant t,*
$CP_{gaz\ sortie}$ : *capacité calorifique des gaz d'échappement en sortie du DOC,*
$m_{DOC}$ : *masse du DOC,*
$Cp_{DOC}$ : *capacité calorifique du DOC,*

$T_{DOC}$ (t) : température du DOC à l'instant t,

$T_{DOC}$ (t-1) : température du DOC à l'instant t-1,

$T_{gaz\ entrée}$ (t) : température des gaz d'échappement en entrée du DOC à l'instant t,

$Q_{gaz}$ (t) : débit de gaz d'échappement en entrée du DOC à l'instant t,

$CP_{gaz\ entrée}$ : capacité calorifique des gaz d'échappement en entrée du DOC.

$T_{gaz\ entrée}$, $T_{gaz\ sortie}$, $Q_{gaz}$ proviennent respectivement d'informations issues d'un capteur de température $Te_{DOC}$ 15 disposé en entrée du DOC, d'un capteur de température $Ts_{DOC}$ 16 disposé en sortie du DOC et du débitmètre 17. $T_{DOC}$ provient du modèle thermique.

2) Détermination de l'exotherme modélisé :

L'exotherme modélisé peut être déterminé :

- soit par des cartographies représentant l'exotherme généré dans le DOC 13 en fonction d'un point de fonctionnement régime/couple du moteur,
- soit calculé à partir des émissions cartographiées des réducteurs en fonction de la consigne d'injection de carburant de régénération appliquée à l'injecteur d'échappement.

Cette quantité estimée de réducteurs est ensuite multipliée par le pouvoir calorifique inférieur des réducteurs contenus dans le carburant de régénération.

Ainsi, l'exotherme modélisé s'obtient en appliquant la formule suivante :

$$Qexo(t)_{modélisé} = Q_{\_inj\ d'échappement}(t) * pci\_Red$$

Les différents termes de cette formule correspondent aux grandeurs suivantes :

$Qexo(t)_{modélisé}$: modélisation de *l'exotherme du DOC généré par l'injection d'échappement,*

$Q_{\_inj\ d'échappement}(t)$ : débit de carburant de régénération injecté par l'injecteur d'échappement,

pci\_Red : pouvoir calorifique inférieur moyen des réducteurs présents dans le carburant de régénération.

L'injection tardive est calibrée de sorte à ne pas intervenir de manière substantielle ni dans la génération de l'exotherme du DOC 13, ni lors de l'apprentissage des dérives de l'injecteur d'échappement 14.

3) Comparaison de l'exotherme mesuré et de l'exotherme modélisé :

On vise à cette étape à comparer les énergies mesurée et modélisée qui sont générées par la réaction d'oxydation.

Pour s'affranchir des erreurs dues à l'inertie du système, on compare sur une durée calibrable les puissances intégrées issues de la détermination de l'exotherme mesuré et de l'exotherme modélisé. On compare donc des données déduites de l'exotherme mesuré à des données déduites de l'exotherme modélisé.

Ainsi, les performances du contrôle adaptatif dépendent du compromis entre la vitesse de dérive des injecteurs et la vitesse d'apprentissage de ces dérives.

Pour rappel, dans ce mode de réalisation l'apprentissage est effectué uniquement durant les phases de fonctionnement de l'injecteur d'échappement 14. L'intégration est donc également menée uniquement durant ces mêmes phases.

La comparaison est effectuée en calculant le ratio a suivant :

$$\alpha = \frac{\int Qexo\_mesuré(t) \cdot dt}{\int Qexo\_modélisé(t) \cdot dt}$$

$Qexo(t)_{mesuré}$ et $Qexo(t)_{modélisé}$ correspondent respectivement à l'exotherme mesuré du DOC et à la modélisation de l'exotherme du DOC généré par l'injection d'échappement.

4) Application du recalage

L'écart entre les énergies permet de déterminer l'erreur due à une dérive des injecteurs ou des capteurs.

Ainsi, en tenant compte de cet écart on corrige en cours de régénération la consigne de carburant de régénération appliquée à l'injecteur d'échappement 14. La consigne en boucle ouverte de quantité de carburant de régénération est corrigée par un gain multiplicatif (Coeff) déterminé comme un filtre basse-fréquence sur le signal a défini précédemment.

Le gain Coeff est déterminé en appliquant la formule suivante :

$$Coeff(n) = (1 - pond) * Coeff(n-1) + pond * \alpha(n)$$

Les différents termes de cette formule correspondent aux grandeurs suivantes :

pond : coefficient de pondération dépendant du poids de la comparaison effectuée à l'étape précédente.
$Coeff(n)$ : coefficient d'erreur calculé à l'étape n
$Coeff(n-1)$ : coefficient d'erreur calculé à l'étape n-1.

L'invention permet ainsi de s'affranchir des dérives et des dispersions tout en assurant une performance dynamique élevée peu tributaire du temps de réponse du système.

Des modes de réalisation particuliers vont par la suite être présentés.

Les dérives et dispersions des différents paramètres peuvent être influencées par le point de fonctionnement du moteur 20. Il est prévu dans un mode particulier de réalisation de l'invention d'effectuer un apprentissage et une correction spécifiques à chaque zone de fonctionnement moteur 20. Ainsi, la précision de la détermination de la quantité de carburant de régénération est améliorée.

Dans une autre variante de réalisation, il est prévu, en l'absence du capteur de température $Te_{DOC}$ 15 disposé à l'entrée du DOC 13, de reconstruire le signal de température des gaz d'échappement en entrée du DOC 13 à partir d'une modélisation. Cette modélisation de la température des gaz d'échappement en entrée du DOC 13, peut par exemple être alimentée par un capteur amont de température placé à un endroit quelconque en amont de l'entrée du DOC 13.

Il a été constaté que l'injecteur à l'échappement 14 ne peut pas être utilisé sur l'ensemble de la plage de fonctionnement du moteur 20. En effet, lorsque le moteur est faiblement chargé, l'injecteur d'échappement 14 ne permet pas une vaporisation satisfaisante du carburant de régénération car la température est insuffisante au niveau du nez de l'injecteur. De plus, lorsque le moteur est fortement chargé, le temps de séjour du carburant de régénération dans le DOC 13 est trop faible pour que les réducteurs contenus dans le carburant de régénération soient oxydés. Afin de palier les limitations de l'injecteur d'échappement 14, il est habituellement fait recours à des injections tardives.

Dans un autre mode de réalisation il est prévu d'appliquer la même stratégie de recalage non plus lors de l'injection d'échappement uniquement, mais également lors de l'injection tardive.

La consigne définissant la quantité de carburant de régénération à injecter par un ou plusieurs injecteurs cylindre disposés dans les cylindres du moteur est désignée par la suite consigne d'injection tardive.

Les corrections des consignes de débits de carburant de régénération d'injection tardive et d'injection d'échappement peuvent se faire simultanément.

Cependant l'apprentissage des dérives est effectué de manière séparée. Ainsi, il n'y a pas d'injection tardive lors de l'apprentissage des dérives de l'injecteur d'échappement 14, et inversement, il n'y a pas d'injection d'échappement lors de l'apprentissage des dérives des injecteurs des cylindres.

Effectuer un recalage également sur les injecteurs des cylindres s'avère particulièrement avantageux lorsque les dérives et dispersions de ces injecteurs sont importantes et/ou que ces derniers sont fortement sollicités en cours de régénération du FAP 12.

La modélisation de l'exotherme généré par le carburant de régénération injecté lors d'une injection tardive est désignée par la suite exotherme d'injection tardive modélisé. Cet exotherme d'injection tardive modélisé est obtenu en appliquant la formule suivante:

$$Qexo\_modélisé(t) = Q_{inj\ cylindre\ HC}(t)*pci\_HC + Q_{inj\ cylindre\ CO}(t)*pci\_CO$$

Les différents termes de cette formule correspondent aux grandeurs suivantes :

$Q_{\_inj\ cylindre\ HC}$ *(t):* débit de réducteur HC injecté par l'injecteur disposé dans le cylindre lors de l'injection tardive,
$Q_{\_inj\ cylindre\ CO}$ *(t):* débit de réducteur CO injecté par l'injecteur disposé dans le cylindre lors de l'injection tardive,
*pci_HC:* pouvoir calorifique inférieur moyen des réducteurs HC présents dans le carburant de régénération,
pci CO : pouvoir calorifique inférieur moyen des réducteurs CO présents dans le carburant de régénération.

Avantageusement, la présente invention permet de corriger les dérives et dispersions des éléments influant directement sur la thermique du FAP.

En outre elle présente des performances dynamiques élevées puisqu'elle permet de s'affranchir sensiblement des imprécisions dues à l'inertie du DOC 13.

Elle permet donc d'assurer un contrôle précis de la thermique à l'intérieur du FAP afin d'en améliorer sa régénération.

L'invention offre également une grande souplesse de mise en oeuvre. En effet, elle peut être utilisée avec ou sans capteur de température en entrée de DOC. De plus, elle peut également être adaptée en fonction de la précision souhaitée. Ainsi, sa stratégie de recalage peut ou non prendre en compte l'injection tardive, et être par ailleurs adaptée de façon spécifique pour chaque zone de fonctionnement du moteur 20.

En outre, l'installation de l'invention sur les lignes d'échappement équipées de FAP n'implique pas d'augmentation sensible des coûts.

**Revendications**

1. Procédé de détermination de la quantité de carburant de régénération à injecter dans une ligne d'échappement (11) d'un véhicule équipé d'un filtre à particules (FAP) (12), d'un catalyseur d'oxydation (DOC) (13) et d'au moins un injecteur d'échappement (14), en vue de régénérer le FAP, **caractérisé en ce que**:

   - on détermine une consigne de quantité de carburant de régénération à injecter dans la ligne d'échappement par l'injecteur d'échappement,
   - on détermine à partir de mesures un exotherme mesuré du DOC,
   - on détermine à partir d'une modélisation un exotherme modélisé du DOC,
   - on effectue une comparaison de données déduites de l'exotherme mesuré à des données déduites de l'exotherme modélisé,
   - on corrige la consigne en fonction de la comparaison.

2. Procédé selon la revendication précédente, **caractérisé en ce qu'**on détermine l'exotherme mesuré en appliquant la formule suivante :

$$Qexo(t)_{mesuré} = T_{gaz\ sortie}\ (t)* Q_{gaz}\ (t)*Cp_{gaz\ sortie} + m_{DOC}Cp_{DOC}*[\ T_{DOC}\ (t)$$
$$- T_{DOC}\ (t\text{-}1)\ ] + Wpertes - T_{gaz\ entrée}\ (t)*\ Q_{gaz}\ (t)*Cp_{gaz\ entrée}$$

dans laquelle les différents termes correspondent aux grandeurs suivantes :

   $QeXO(t)_{mesuré}$ : exotherme mesuré du DOC,
   $T_{gaz\ sortie}$ (t) : température des gaz d'échappement en sortie du DOC à l'instant t,
   $Q_{gaz}$ (t) : débit de gaz d'échappement à l'instant t,
   $Cp_{gaz}$ sortie : capacité calorifique des gaz d'échappement en sortie du DOC,
   $m_{DOC}$ : masse du DOC,
   $Cp_{DOC}$ : capacité calorifique du DOC,
   $T_{DOC}$ (t) : température du DOC à l'instant t,
   $T_{DOC}$ (t-1) : température du DOC à l'instant t-1.
   $T_{gaz\ entrée}$ (t) : température des gaz d'échappement en entrée du DOC à l'instant t,
   $Q_{gaz}$ (t) : débit de gaz d'échappement en entrée du DOC à l'instant t,
   $Cp_{gaz}$ entrée : capacité calorifique des gaz d'échappement en entrée du DOC.

3. Procédé selon l'une quelconque des revendications précédentes, **caractérisé en ce qu'**on détermine l'exotherme modélisé en appliquant la formule suivante :

$$Qexo(t)_{modélisé} = Q_{\_inj\ d'échappement}(t) * pci\_Red$$

dans laquelle les différents termes correspondent aux grandeurs suivantes :

$Qexo(t)_{modélisé}$: modélisation de *l'exotherme du DOC généré par l'injection d'échappement,*
$Q_{\_inj\ d'échappement}(t)$: débit de carburant de régénération injecté par l'injecteur d'échappement,
pci\_Red : pouvoir calorifique inférieur moyen des réducteurs présents dans le carburant de régénération.

4. Procédé selon l'une quelconque des revendications précédentes, **caractérisé en ce qu'**on effectue la comparaison en appliquant la formule suivante :

$$\alpha = \frac{\int Qexo\_mesuré(t) \cdot dt}{\int Qexo\_modélisé(t) \cdot dt}$$

5. Procédé selon la revendication précédente, **caractérisé en ce qu'**on corrige la consigne par un gain Coeff multiplicatif, ce gain Coeff étant déterminé en appliquant la formule suivante :

$$Coeff(n) = (1 - pond) * Coeff(n-1) + pond * \alpha(n)$$

dans laquelle les différents termes correspondent aux grandeurs suivantes :

pond : coefficient de pondération dépendant du poids de la comparaison effectuée à l'étape précédente,
*Coeff(n)* : coefficient d'erreur calculé à l'étape n,
*Coeff(n-1)* : coefficient d'erreur calculé à l'étape n-1.

6. Procédé selon l'une quelconque des revendications précédentes, **caractérisé en ce qu'**on détermine la consigne en fonction d'une cartographie par point de fonctionnement régime/couple du moteur.

7. Procédé selon l'une quelconque des revendications précédentes, **caractérisé en ce qu'**on dispose un capteur amont de température en amont de l'entrée du DOC (13) et qu'on recompose le signal de température des gaz d'échappement en entrée du DOC en fonction d'une modélisation et des données issues du capteur amont.

8. Procédé selon l'une quelconque des revendications précédentes, **caractérisé en ce que**:

- on détermine une consigne d'injection tardive définissant la quantité de carburant de régénération à injecter dans la ligne d'échappement (11) par un ou plusieurs injecteurs cylindre disposés dans les cylindres du moteur (20),
- on détermine à partir de mesures un exotherme mesuré du DOC,
- on détermine à partir d'une modélisation un exotherme d'injection tardive modélisé du DOC (13) représentant l'exotherme généré par le carburant de régénération injecté par les injecteurs disposés dans les cylindres du moteur.
- on effectue une comparaison de données déduites de l'exotherme mesuré à des données déduites de l'exotherme d'injection tardive modélisé,
- on corrige la consigne d'injection tardive en fonction de la comparaison.

9. Procédé selon la revendication 1, **caractérisé en ce qu'**on détermine l'exotherme d'injection tardive modélisé en appliquant la formule suivante :

$$Qexo\_modélisé(t) = Q_{\_inj\ cylindre\ HC}(t)*pci\_HC + Q_{\_inj\ cylindre\ CO}(t)*pci\_CO$$

dans laquelle les différents termes correspondent aux grandeurs suivantes :

$Qexo(t)_{modélisé}$: modélisation de *l'exotherme du DOC généré par l'injection tardive,*
$Q_{\_inj\ cylindre\ HC}$ *(t):* débit de réducteur HC injecté lors de l'injection tardive par l'injecteur disposé dans le cylindre,
$Q_{\_inj\ cylindre\ CO}$ *(t):* débit de réducteur CO injecté lors de l'injection tardive par l'injecteur disposé dans le cylindre,
pci_HC: pouvoir calorifique inférieur moyen des réducteurs HC présents dans le carburant de régénération,
pci CO : pouvoir calorifique inférieur moyen des réducteurs CO présents dans le carburant de régénération.

10. Système (10) de traitement des gaz d'échappement issus d'un moteur (20) à combustion interne, comprenant une ligne d'échappement (11) équipée d'un filtre à particules (FAP) (12), d'un catalyseur d'oxydation (DOC) (13), d'au moins un injecteur d'échappement (14), et d'une unité de contrôle (18), **caractérisé en ce que** le système (10) est agencé de manière à mettre en oeuvre le procédé selon l'une quelconque des revendications 1 à 9.

## Claims

1. Method of determining the amount of regeneration fuel to be injected into an exhaust line (11) of a vehicle equipped with a particulate filter (PF) (12), with an oxidation catalyst (CAT) (13) and with at least one exhaust injector (14) for the purpose of regenerating the PF, **characterized in that**:

   - a setpoint value of the amount of regeneration fuel to be injected into the exhaust line by the exhaust injector is determined;
   - a measured exotherm of the CAT is determined from measurements;
   - a modeled exotherm of the CAT is determined from a model;
   - a comparison is made between data deduced from the measured exotherm and data deduced from the modeled exotherm; and
   - the setpoint value is corrected according to the comparison.

2. Method according to the preceding claim, **characterized in that** the measured exotherm is determined by applying the following formula:

$$Q_{exo,meas}(t) = T_{gas\ outlet}(t)Q_{gas}(t)Cp_{gas\ outlet+}(t) = T_{gas\ outlet}$$
$$(t)Q_{gas}(t)Cp_{gas\ outlet+}m_{CAT}Cp_{CAT}[T_{CAT}(t) - T_{CAT}(t-1)] + W_{loss} - T_{gas}$$
$$inlet(t)Q_{gas}(t)Cp_{gas\ inlet}$$

in which the various terms correspond to the following quantities:

$Q_{exo,meas}$ (t) : measured exotherm of the CAT;
$T_{gas}$ outlet (t) : temperature of the exhaust gas at the outlet of the CAT at time t;
$Q_{gas}$ (t): flow rate of the exhaust gas at time t;
$Cp_{gas}$ outlet: heat capacity of the exhaust gas at the outlet of the CAT;
$m_{CAT}$: mass of the CAT;
$Cp_{CAT}$: heat capacity of the CAT;
$T_{CAT}$(t): temperature of the CAT at time t;
$T_{CAT}$(t-1): temperature of the CAT at time t-1;
$T_{gas\ inlet}$ (t): temperature of the exhaust gas at the inlet of the CAT at time t;
$Q_{gas}$ (t) : flow rate of the exhaust gas at the inlet of the CAT at time t; and
$Cp_{gas\ inlet}$: heat capacity of the exhaust gas at the inlet of the CAT.

3. Method according to either of the preceding claims, **characterized in that** the modeled exotherm is determined by applying the following formula:

$$Q_{exo,model}(t) = Q_{exhaust\ inj}(t)NCV_{red}$$

in which the various terms correspond to the following quantities:

$Q_{exo,model}$ (t): model of the CAT exotherm generated by the exhaust injection;
$Q_{exhaust\ inj}$ (t) : flow rate of regeneration fuel injected by the exhaust injector; and
$NCV_{red}$: average net calorific value of the reducing agents present in the regeneration fuel.

4. Method according to any one of the preceding claims, **characterized in that** the comparison is made by applying the following formula:

$$\alpha\frac{\int Q_{exo,meas}(t)dt}{\int Q_{exo,model}(t)dt}\ .$$

5. Method according to the preceding claim, **characterized in that** the setpoint value is corrected by a multiplicative gain Coef, this gain Coef being determined by applying the following formula:

$$Coef_n = (1-w)Coef_{n-1}+w\alpha_n$$

in which the various terms correspond to the following quantities:

w: weighting coefficient dependent on the weight of the comparison performed in the preceding step;
$Coef_n$: error coefficient calculated at step n;
$Coef_{n-1}$: error coefficient calculated at step n-1.

6. Method according to any one of the preceding claims, **characterized in that** the setpoint value is determined from an engine speed/torque operating point map.

7. Method according to any one of the preceding claims, **characterized in that** an upstream temperature sensor is placed upstream of the inlet of the CAT (13) and the temperature signal corresponding to the temperature of the exhaust gas at the inlet of the CAT is readjusted according to a model and the data output by the upstream sensor.

8. Method according to any one of the preceding claims, **characterized in that**:

- a late injection setpoint value is determined, defining the amount of regeneration fuel to be injected into the exhaust line (11) by one or more cylinder injectors placed in the cylinders of the engine (20);
- a measured exotherm of the CAT is determined from measurements;
- a modeled late-injection exotherm of the CAT (13), representing the exotherm generated by the regeneration fuel injected by the injectors placed in the cylinders of the engine, is determined from a model;
- a comparison is made between data deduced from the measured exotherm and data deduced from the modeled late-injection exotherm; and
- the late-injection setpoint value is corrected according to the comparison.

9. Method according to Claim 1, **characterized in that** the modeled late-injection exotherm is determined by applying the following formula:

$$Q_{exo,model}(t) = Q_{cyl.inj.HC}(t)NCV_{HC}+Q_{cyl.inj.CO}(t)NCV_{CO}$$

in which the various terms correspond to the following quantities:

$Q_{exo,model}$ (t): model of the CAT exotherm generated by the late injection;

$Q_{cyi.inj.HC}(t)$ : flow rate of the HC reducing agent injected during late injection by the injector placed in the cylinder;
$Q_{cyl.inj.CO}(t)$ : flow rate of the CO reducing agent injected during late injection by the injector placed in the cylinder;
$NCV_{HC}$: average net calorific value of the HC reducing agents present in the regeneration fuel; and
$NCV_{CO}$: average net calorific value of the CO reducing agents present in the regeneration fuel.

10. System (10) for treating the exhaust gas output by an internal combustion engine (20), comprising an exhaust line (11) equipped with a particulate filter (PF) (12), with an oxidation catalyst (CAT) (13), with at least one exhaust injector (14) and with a control unit (18), **characterized in that** the system (10) is designed to implement the method according to any one of Claims 1 to 9.

**Patentansprüche**

1. Verfahren zur Bestimmung der Menge an Regenerationskraftstoff, die in eine Auspuffanlage (11) eines Fahrzeugs eingespeist werden soll, die mit einem Partikelfilter (FAP) (12), mit einem Oxidationskatalysator (DOC) (13) und mit mindestens einem Auspuff-Injektor (14) ausgestattet ist, um den FAP zu regenerieren, **dadurch gekennzeichnet, dass**:

    - ein Mengensollwert an vom Auspuff-Injektor in die Auspuffanlage einzuspeisenden Regenerationskraftstoff bestimmt wird,
    - ausgehend von Messungen eine gemessene Exotherme des DOC bestimmt wird,
    - ausgehend von einer Modellbildung eine modellisierte Exotherme des DOC bestimmt wird,
    - ein Vergleich von von der gemessenen Exotherme abgeleiteten Daten mit von der modellisierten Exotherme abgeleiteten Daten durchgeführt wird,
    - der Sollwert in Abhängigkeit vom Vergleich korrigiert wird.

2. Verfahren nach dem vorhergehenden Anspruch, **dadurch gekennzeichnet, dass** die gemessene Exotherme unter Anwendung der folgenden Formel bestimmt wird:

$$Qexo(t)_{gemessen} = T_{Gas\ Ausgang}(t) {}^{*}Q_{Gas}(t) {}^{*}Cp_{Gas\ Ausgang}+$$
$$m_{DOC}Cp_{DOC} {}^{*}[T_{DOC}(t)-T_{DOC}(t-1)]+W_{Verluste}-$$
$$T_{Gas\ Eingang}(t) {}^{*}Q_{Gas}(t) {}^{*}Cp_{Gas\ Eingang}$$

in der die verschiedenen Begriffe den folgenden Größen entsprechen:

    $Qexo(t)_{gemessen}$: gemessene Exotherme des DOC,
    $T_{Gas}\ Ausgang\ (t)$ : Temperatur der Abgase am Ausgang des DOC im Zeitpunkt t,
    $Q_{Gas}(t)$: Abgasdurchsatz im Zeitpunkt t,
    $Cp_{Gas}\ Ausgang$: Wärmekapazität der Abgase am Ausgang des DOC,
    $m_{DOC}$: Masse des DOC,
    $Cp_{DOC}$: Wärmekapazität des DOC,
    $T_{DOC}(t)$ : Temperatur des DOC im Zeitpunkt t,
    $T_{DOC(t-1)}$ : Temperatur des DOC im Zeitpunkt t-1,
    $T_{Gas\ Eingang}(t)$: Temperatur der Abgase am Eingang des DOC im Zeitpunkt t,
    $Q_{Gas}(t)$: Abgasdurchsatz am Eingang des DOC im Zeitpunkt t,
    $Cp_{Gas\ Eingang}$: Wärmekapazität der Abgase am Eingang des DOC.

3. Verfahren nach einem der vorhergehenden Ansprüche, **dadurch gekennzeichnet, dass** die modellisierte Exotherme unter Anwendung der folgenden Formel bestimmt wird:

$$Qexo(t)_{modellisiert} = Q\_{Auspuff\text{-}Injektor}(t) {}^{*}pci\_Red$$

in der die verschiedenen Begriffe den folgenden Größen entsprechen:

Qexo (t)$_{modellisiert}$: Modellbildung der durch die Auspuff-Injektion erzeugten Exotherme des DOC,
Q$_{\_Auspuff\text{-}injektor}$(t): Durchsatz von durch den Auspuff-Injektor injiziertem Regenerationskraftstoff,
pci_Red: mittlerer unterer Heizwert der im Regenerationskraftstoff enthaltenen Reduktionsmittel.

**4.** Verfahren nach einem der vorhergehenden Ansprüche, **dadurch gekennzeichnet, dass** der Vergleich durch Anwendung der folgenden Formel durchgeführt wird:

$$\alpha = \frac{\int Qexo\_gemessen(t).dt}{\int Qexo\_mod\,ellisiert(t).dt}$$

**5.** Verfahren nach dem vorhergehenden Anspruch, **dadurch gekennzeichnet, dass** der Sollwert durch eine multiplikative Verstärkung Coeff korrigiert wird, wobei diese Verstärkung Coeff durch Anwendung der folgenden Formel bestimmt wird:

$$\texttt{Coeff(n) = (1-pond)* Coeff(n-1) + pond* } \alpha \texttt{(n)}$$

in der die verschiedenen Begriffe den folgenden Größen entsprechen:

pond: Gewichtungskoeffizient, der vom Gewicht des im vorhergehenden Schritt durchgeführten Vergleichs abhängt,
Coeff(n): im Schritt n berechneter Fehlerkoeffizient,
Coeff(n-1): im Schritt n-1 berechneter Fehlerkoeffizient.

**6.** Verfahren nach einem der vorhergehenden Ansprüche, **dadurch gekennzeichnet, dass** der Sollwert in Abhängigkeit von einem Kennfeld pro Drehzahl/Drehmoment-Betriebspunkt des Motors bestimmt wird.

**7.** Verfahren nach einem der vorhergehenden Ansprüche, **dadurch gekennzeichnet, dass** ein vorderer Temperatursensor vor dem Eingang des DOC (13) angeordnet wird, und dass das Temperatursignal der Abgase am Eingang des DOC in Abhängigkeit von einer Modellbildung und den aus dem vorderen Sensor stammenden Daten neu zusammengesetzt wird.

**8.** Verfahren nach einem der vorhergehenden Ansprüche, **dadurch gekennzeichnet, dass**:

- ein Sollwert einer späten Injektion bestimmt wird, der die Menge an Regenerationskraftstoff definiert, die in die Auspuffanlage (11) durch einen oder mehrere Zylinder-Injektoren injiziert werden soll, die in den Zylindern des Motors (20) angeordnet sind,
- ausgehend von Messungen eine gemessene Exotherme des DOC bestimmt wird,
- ausgehend von einer Modellbildung eine modellisierte Exotherme einer späten Injektion des DOC (13) bestimmt wird, die die Exotherme darstellt, die von dem von den in den Zylindern des Motors angeordneten Injektoren injizierten Regenerationskraftstoff erzeugt wird,
- ein Vergleich von Daten, die von der gemessenen Exotherme abgeleitet werden, mit Daten durchgeführt wird, die von der modellisierten Exotherme der späten Injektion abgeleitet werden,
- der Sollwert der späten Injektion in Abhängigkeit von dem Vergleich korrigiert wird.

**9.** Verfahren nach Anspruch 1, **dadurch gekennzeichnet, dass** die modellisierte Exotherme der späten Injektion unter Anwendung der folgenden Formel bestimmt wird:

$$Qexo_{modellisiert}(t) = Q\_Inj\ Zylinder\ HC(t) * pci\_HC +$$
$$Q\_Inj\ Zylinder\ CO(t) * pci\_CO$$

in der die verschiedenen Begriffe den folgenden Größen entsprechen:

$Qexo(t)_{modellisiert}$: Modellbildung der durch die späte Injektion erzeugten Exotherme des DOC,
$Q_{\_Inj\ Zylinder\ HC}$ (t) : Durchsatz an Reduktionsmittel HC,
das bei der späten Injektion durch den im Zylinder angeordneten Injektor injiziert wird,
$Q_{\_Inj\ Zylinder\ CO}$ (t) : Durchsatz an Reduktionsmittel CO,
das bei der späten Injektion durch den im Zylinder angeordneten Injektor injiziert wird,
pci_HC: unterer mittlerer Heizwert der im Regenerationskraftstoff vorhandenen Reduktionsmittel HC,
pci CO: unterer mittlerer Heizwert der im Regenerationskraftstoff vorhandenen Reduktionsmittel CO.

**10.** System (10) zur Behandlung der aus einem Verbrennungsmotor (20) stammenden Abgase, das eine Auspuffanlage (11) aufweist, die mit einem Partikelfilter (FAP) (12), einem Oxidationskatalysator (DOC) (13), mindestens einem Auspuff-Injektor (14) und mit einer Steuereinheit (18) ausgestattet ist, **dadurch gekennzeichnet, dass** das System (10) so eingerichtet ist, dass es das Verfahren nach einem der Ansprüche 1 bis 9 anwendet.

EP 2 092 168 B1

FIG.1

16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1582709 A